# DEMANDE DE BREVET EUROPEEN

(11) **EP 1 798 942 A1**
(43) Date de publication de la demande: **20.06.2007**
(21) Numéro de dépôt: 06126469.3
(22) Date de dépôt: 19.12.2006
(51) Int. Cl.: H04M 1/27

(54) **Dispositif formant repertoire telephonique partage, terminal de téléphonie et procédé associés**

(30) Priorité: 19.12.2005 FR 0512912
(71) Demandeur: Bouygues Telecom, 92100 Boulogne Billancourt (FR)
(72) Inventeur: Morel, Marc, 91570, Bievres (FR)
(74) Mandataire: Callon de Lamarck, Jean-Robert

(57) **Abrégé**

L'invention concerne sous un premier aspect un dispositif (1) formant répertoire téléphonique partagé comprenant des moyens de communication sans fil (2) aptes à établir une connexion avec un terminal de téléphonie (10) situé à proximité du dispositif dans une zone de couverture (Zc) desdits moyens de communication sans fil, le terminal (10) comportant un répertoire téléphonique personnel (11) mémorisant des fiches contact et disposant de moyens de connexion (12) auxdits moyens de communication sans fil (2), le dispositif (1) étant caractérisé en ce qu'il comporte en outre:
- des moyens de stockage de fiches contact (3) ;
- des moyens pour mettre à disposition (4) de chaque terminal (10) connecté au dispositif les fiches contact stockées dans les moyens de stockage (3) dudit dispositif pour incorporation desdites fiches dans le répertoire personnel (11) de chaque terminal (10).

L'invention s'étend également à un terminal de téléphonie mobile destiné à être associé à un tel dispositif, ainsi qu'à un procédé de partage de fiches contacts.

## Description

Le domaine de l'invention est celui de la téléphonie, et plus précisément celui du partage de fiches contact mémorisées dans des répertoires téléphoniques.

L'invention concerne un dispositif formant répertoire téléphonique partagé, un terminal de téléphonie, ainsi qu'un procédé permettant de partager des fiches contact entre plusieurs terminaux de téléphonie.

Par « fiche contact », on entend une carte de visite électronique présentant des informations du type nom, adresse, numéro de téléphone, adresse e-mail, etc. A titre d'exemple non limitatif de format de fiche contact, on peut citer le format 'vCard' (selon l'acronyme anglo-saxon de « Virtual Card » désignant une carte virtuelle).

La téléphonie évolue d'un modèle traditionnel où tous les membres d'un même foyer utilisent un unique terminal de téléphonie vers un nouveau modèle où chaque membre du foyer dispose de son propre terminal de téléphonie, en particulier un terminal de téléphonie mobile. Une conséquence de ce nouveau modèle est la disparition du carnet d'adresse familial dans lequel les informations relatives à un contact sont consultables par tous.

Le terminal d'un membre du foyer dispose d'un répertoire téléphonique personnel mémorisant à la fois des fiches contact concernant des contacts purement personnels propres à ce membre et des fiches contacts concernant des contacts « communs » (famille, institutions, etc.) potentiellement utiles à tous les membres du foyer.

Il en découle que les fiches des contacts « communs » sont stockées de manière hétéroclite sur les différents terminaux des membres du foyer. Le terminal d'un premier membre peut ainsi disposer en mémoire de la fiche contact d'un contact commun, tandis que le terminal d'un second membre ne dispose pas de cette fiche contact.

II serait donc souhaitable de pouvoir reproduire l'équivalent du carnet d'adresse familial pour permettre au second membre d'avoir accès aux informations concernant le contact commun détenues par le premier membre.

Bien entendu un tel souhait n'est pas limité au cercle familial, et s'exprime de manière plus générale au sein d'un groupe de personnes souhaitant partager des contacts, par exemple dans un cadre professionnel.

Des techniques ont été proposées pour permettre l'échange de fiches contact. Il s'agit par exemple de transmettre une fiche contact d'un terminal à un autre, voire même de synchroniser les répertoires téléphoniques de deux terminaux (par synchronisation, on entend un processus qui consiste à identifier les différences entre les répertoires et à résoudre ces différences en fusionnant le contenu dans une version unique du répertoire).

Ces techniques nécessitent toutefois d'établir une connexion directe entre deux terminaux de téléphonie.

L'échange de contact est ainsi limité au deux terminaux en connexion, et ne s'étend pas à l'ensemble des personnes du groupe concerné (par exemple l'ensemble des membres du foyer). II ne s'agit donc pas là d'un partage des contacts avec l'ensemble des personnes du groupe concerné.

Par ailleurs, ces techniques de connexion directe s'accompagnent de problèmes de sécurité, par exemple du type transfert de virus d'un terminal à l'autre.

L'invention vise à proposer une technique remédiant à ces inconvénients qui permet de partager de manière automatique entre les différentes personnes d'un groupe les fiches contact stockées de manière hétéroclite sur les différents terminaux des personnes du groupe.

A cet effet, et selon un premier aspect, l'invention propose un dispositif formant répertoire téléphonique partagé comprenant des moyens de communication sans fil aptes à établir une connexion avec un terminal de téléphonie situé à proximité du dispositif dans une zone de couverture desdits moyens de communication sans fil, le terminal comportant un répertoire téléphonique personnel mémorisant des fiches contact personnelles et disposant de moyens aptes à établir un communication avec un réseau de communication ainsi que de moyens de connexion courte-portée auxdits moyens de communication sans fil, le dispositif étant caractérisé en ce qu'il comporte en outre :
- des moyens de stockage de fiches contact ;
- des moyens pour mettre à disposition de chaque terminal connecté au dispositif les fiches contact stockées dans les moyens de stockage dudit dispositif pour incorporation desdites fiches issues des moyens de stockage du dispositif dans le répertoire personnel de chaque terminal avec les fiches contact personnelles mémorisées dans ledit répertoire personnel.

Certains aspects préférés, mais non limitatifs, de ce dispositif sont les suivants :
- il comporte des moyens pour importer dans lesdits moyens de stockage les fiches contacts mémorisées dans le répertoire téléphonique personnel de chaque terminal connecté au dispositif ;
- les moyens de stockage comporte des moyens pour associer à chaque fiche contact importée un identifiant du terminal depuis lequel la fiche est importée ;
- une fiche contact est importée dans lesdits moyens de stockage si elle est mémorisée dans le répertoire téléphonique d'un terminal connecté au dispositif en y étant indiquée comme étant une fiche contact publique ;
- les fiches contact importées dans les moyens de stockage depuis un terminal connecté au dispositif y sont stockées de manière permanente ;
- les fiches contact stockées de manière permanente sont mises à disposition avec un identifiant du dispositif ;
- les fiches contact importées depuis un terminal dans les moyens de stockage y sont stockées de manière temporaire, pendant la durée de la connexion dudit terminal au dispositif ;
- les fiches contact stockées de manière temporaire sont mises à disposition avec l'identifiant de terminal associé.

Selon un deuxième aspect, l'invention propose terminal de téléphonie comportant un répertoire téléphonique personnel mémorisant des fiches contact personnelles et disposant de moyens aptes à établir un communication avec un réseau de communication ainsi que de moyens de connexion courte-portée adaptés pour assurer la connexion dudit terminal à un dispositif selon le premier aspect de l'invention lorsque le terminal est dans la zone de couverture des moyens de communication sans fil dudit dispositif, caractérisé en ce qu'il comporte des moyens pour incorporer dans ledit répertoire personnel les fiches contact mises à disposition par ledit dispositif avec les fiches contact personnelles mémorisées dans ledit répertoire personnel.

Certains aspects préférés, mais non limitatifs, de ce terminal sont les suivants :
- les moyens pour incorporer permettent en outre de réaliser un tri parmi les fiches contact mises à disposition par le dispositif et les fiches contact mémorisées dans le répertoire personnel de manière à éliminer les doublons ;
- le terminal comporte en outre des moyens pour mémoriser dans le répertoire téléphonique personnel une fiche contact mise à disposition par le dispositif ;
- le terminal comporte en outre des moyens pour exporter vers le dispositif les fiches contact mémorisées dans le répertoire téléphonique personnel, lesdites fiches exportées étant alors mises à disposition de chaque terminal connecté au dispositif ;
- le terminal comporte des moyens pour permettre à un utilisateur d'indiquer celles des fiches contact mémorisées dans le répertoire personnel qu'il souhaite rendre publiques pour exportation vers le dispositif ;
- le terminal comporte des moyens pour permettre à un utilisateur d'indiquer parmi les fiches de contact publiques celles destinées à être exportées vers le dispositif pour y être stockées de manière permanente.

Selon encore un autre aspect, l'invention propose un procédé de partage de fiches contact entre plusieurs terminaux de téléphonie, caractérisé en ce qu'il comporte les étapes consistant à :
- prévoir un dispositif selon le premier aspect de l'invention ;
- placer un terminal selon le deuxième aspect de l'invention dans la zone de couverture des moyens de communication sans fil du dispositif de manière à établir une connexion entre le dispositif et le terminal ;
- dès la connexion établie, mettre à disposition du terminal les fiches contacts stockées dans le dispositif pour incorporation desdites fiches dans le répertoire téléphonique personnel du terminal.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 représente un ensemble formé d'un dispositif selon le premier aspect de l'invention et de deux terminaux selon le deuxième aspect de l'invention présents dans la zone de couverture des moyens de communication sans fil du dispositif et connectés au dispositif ;
- les figures 2 et 3 sont des exemples d'affichage de répertoire téléphonique personnel d'un terminal connecté au dispositif selon le premier aspect de l'invention ;
- la figure 4 représente une variante de l'ensemble de la figure 1 ;
- la figure 5 illustre les échanges entre un terminal selon le deuxième aspect de l'invention et le dispositif selon le premier aspect de l'invention, ainsi que les opérations opérées au niveau du terminal et du dispositif, relatifs à l'établissement de la connexion entre le terminal et le dispositif ;
- la figure 6 illustre les échanges entre un terminal selon le deuxième aspect de l'invention et le dispositif selon le premier aspect de l'invention, ainsi que les opérations opérées au niveau du terminal et du dispositif, relatifs à la rupture de la connexion entre le terminal et le dispositif.

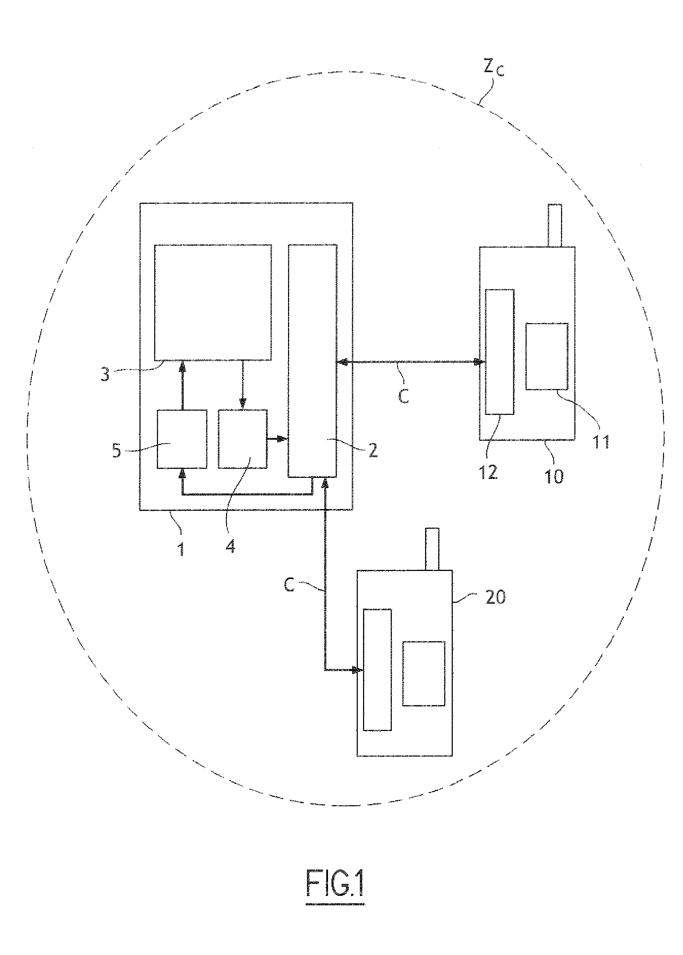

En référence à la figure 1, on a représenté un dispositif 1 formant répertoire téléphonique partagé selon le premier aspect de l'invention.

Ce dispositif comprend des moyens de communication sans fil 2 aptes à établir une connexion avec des terminaux de téléphonie 10, 20 situés à proximité du dispositif 1 dans une zone de couverture Zc desdits moyens de communication sans fil.

Chaque terminal 10, 20 dispose à cet effet de moyens de connexion courte portée 12.

Chaque terminal comporte en outre des moyens (non représentés) classiques en eux-mêmes et aptes à établir une communication avec un réseau de communication.

Les terminaux de téléphonie 10, 20 peuvent être des terminaux fixes ou cellulaires ; le réseau de communication étant respectivement un réseau filaire (type réseau téléphonique commuté RTC) ou un réseau cellulaire (type réseau GSM).

Lorsqu'un terminal 10, 20 entre dans la zone de couverture Zc des moyens de communication 2 du dispositif 1, une connexion sans fil est automatiquement établie entre le dispositif et le terminal.

Une telle connexion sans fil repose par exemple sur l'une des technologies WiFi, Bluetooth, wireless USB ou UWB.

A titre purement illustratif, les moyens de communication 2 du dispositif 1 sont par exemple une radio WiFi et/ou Bluetooth, et les moyens de connexion 12 des terminaux de téléphonie comportent également une radio WiFi et/ou Bluetooth.

Les connexions représentées par les doubles flèches C s'opèrent alors, sous réserve que les terminaux 10, 20 et le dispositif 1 aient été préalablement configurés pour ce faire, en fonction de leur mode de connexion radio.

A titre d'exemples, dans le cas d'une radio Bluetooth, l'adresse BD_ADDR est prise en compte et dans le cas du WiFi, la MAC adresse de la carte wifi du téléphone est utilisée.

Afin de réaliser la première connexion d'un terminal au dispositif 1, il est possible de prévoir que l'utilisateur doive appuyer sur un bouton prévu sur le dispositif afin que ce dernier se mette en attente d'un nouvel identifiant.

Dans le cas d'une radio Bluetooth, l'utilisateur du terminal saisit un code pin pour valider la connexion. Ce code pourra être par exemple inscrit dans la documentation du dispositif ou gravé sous un boîtier recevant le dispositif.

Dans le cas d'une radion WiFi, l'utilisateur saisit l'adresse IP du dispositif. Cette adresse peut également être fournie par le routeur wifi utilisé.

On notera que cette partie identification/appariement repose sur des standards du marché et n'est pas spécifique à l'invention.

Le dispositif comporte des moyens d'alimentation (non représentés), par exemple une alimentation par batterie ou encore une alimentation par une prise de courant (via un transformateur).

Dans le cadre d'une application préférentielle de l'invention, le dispositif formant répertoire partagé prend la forme d'un boîtier autonome disposé dans un lieu commun aux différentes personnes concernées par le partage des fiches contact. Dans le cadre familial, ce boîtier est ainsi disposé au sein du foyer.

Bien entendu, le dispositif formant répertoire partagé autonome peut également être intégré dans tout type d'équipement ayant vocation à être disposé dans un tel lieu commun.

Les terminaux de téléphonie 10, 20 comportent chacun un répertoire téléphonique personnel 11 dans lequel des fiches contact sont mémorisées.

Ce répertoire 11 comprend les fiches contact stockées dans le terminal, et également, le cas échéant lorsque le terminal accueille en outre une carte SIM, les fiches contacts stockées dans ladite carte SIM.

Le dispositif 1 comporte quant à lui des moyens de stockage 3 de fiches contact. Comme cela sera décrit par la suite, les moyens de stockage 3 peuvent être outre être adaptés pour associer à une fiche contact un statut de ladite fiche, ainsi que, le cas échéant, le terminal d'origine dont est issue ladite fiche.

Les moyens de stockage 3 sont en outre adaptés pour stocker des identifiants des terminaux du groupe de personnes concerné par le partage des contacts. A titre d'exemple, dans le cadre d'une application familiale, les moyens de stockage 3 stockent les identifiants des terminaux mobiles des membres du foyer.

Conjointement à l'identifiant d'un terminal autorisé, les moyens de stockage 3 peuvent en outre stocker un état (absent/présent) dudit terminal.

Ainsi lorsqu'un terminal entre dans la zone de couverture Zc du dispositif 1, une première étape consiste à identifier le terminal, par comparaison de l'identifiant présenté par le terminal au dispositif avec les identifiants stockées dans le dispositif.

Le stockage des données dans les moyens de stockage 3 du dispositif 1 peut être réalisé sous la forme de fichiers plats, par exemple de deux fichiers plats, l'un contenant les terminaux concernés autorisés, l'autre les contacts sous forme d'enchaînement de fiches contacts (par exemple enchaînement de vCard).

Le stockage peut également être réalisé sous la forme d'une base de données, comprenant par exemple deux tables, en relation via les identifiants des terminaux.

Le dispositif 1 comporte en outre des moyens pour mettre à disposition 4 de chaque terminal 10, 20 connecté au dispositif les fiches contact stockées dans les moyens de stockage 3 dudit dispositif pour incorporation desdites fiches dans le répertoire personnel 11 de chaque terminal 10, 20.

Ainsi lorsqu'un terminal 10 présent dans la zone de couverture Zc est reconnu (identifié) par le dispositif, la connexion sans fil est établie entre le terminal 10 et le dispositif 1 et les fiches contact stockées dans les moyens de stockage 3 du dispositif 1 sont mises à disposition du terminal 10 pour incorporation dans le répertoire personnel 11 du terminal 10.

Les fiches contact mises à disposition par le dispositif étant incorporées dans le répertoire personnel 11 du terminal, ces fiches contact sont alors accessibles par l'utilisateur du terminal 11 de la même manière que les fiches contact personnelles déjà mémorisées dans le répertoire personnel 11 du terminal.

En d'autres termes, le répertoire d'un terminal connecté au dispositif s'enrichit automatiquement des différentes fiches contact stockées sur le dispositif 1 formant répertoire téléphonique partagé.

Le terminal 10 est avantageusement doté de moyens, notamment de moyens logiciels, adaptés pour réaliser un tri parmi les fiches contact mises à disposition par le dispositif 1 et les fiches contact personnelles déjà mémorisées dans le répertoire personnel 11 du terminal. Ce tri est plus particulièrement prévu pour éliminer les doublons entre fiches contact issues du dispositif 1 et fiches contact personnelles.

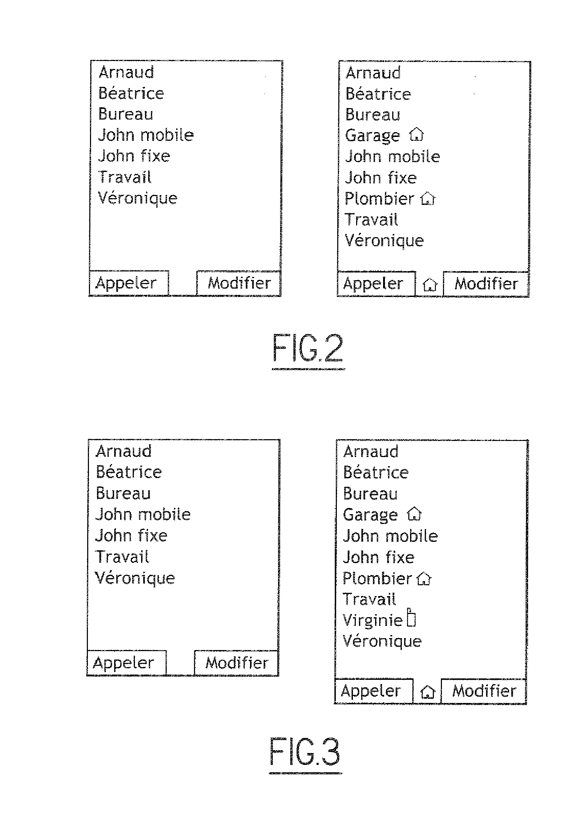

On a représenté à gauche sur la figure 2 l'affichage du répertoire personnel du terminal 10 lorsque celui-ci n'est pas connecté au dispositif 1. Dans ce cas, seules les fiches contact personnelles sont affichées.

On a représenté à droite sur la figure 2 l'affichage du répertoire personnel du terminal 10 lorsque celui-ci est connecté au dispositif 1. Dans ce cas, les fiches contact du dispositif 1 sont incorporées (éventuellement après un tri comme mentionné ci-dessus) dans le répertoire personnel 11 du terminal 10. Les fiches contact issues du dispositif sont alors affichées avec les fiches contact personnelles.

Dans l'exemple ici représenté, les fiches contact 'Garage' et 'Plombier' sont des fiches issues du dispositif 1 et incorporées au répertoire personnel du terminal 10.

De manière avantageuse, les fiches contact issues du dispositif peuvent être affichées de manière à être différenciées des fiches contact personnelles, par exemple (cf. figure 2) en leur associant une icône particulière.

Les fiches contact issues du dispositif 1 dans le répertoire personnel 11 d'un terminal 10 sont préférentiellement stockées dans une mémoire de travail du terminal 10.

On peut également prévoir que ces fiches contact soient mémorisées dans un mémoire de stockage du terminal 10, par exemple une mémoire de type mémoire Flash.

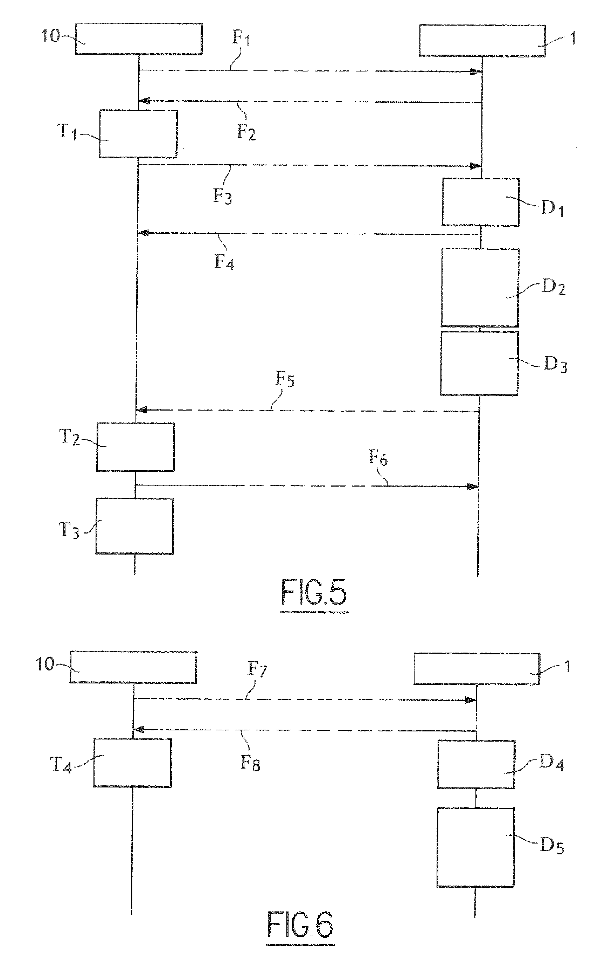

Afin que le terminal puisse continuer à correctement fonctionner lorsqu'il entre dans la zone de couverture Zc du dispositif 1, il peut être prévu que l'incorporation des fiches contact issues du dispositif 1 ne soit pas réalisée d'un bloc, mais au fur et à mesure. Par exemple, afin d'éviter que les temps de connexion au dispositif formant répertoire partagé ne ralentisse le fonctionnement du terminal, on peut prévoir que les échanges entre le terminal et le dispositif (voir notamment les figures 5 et 6) soient réalisés de manière asynchrone et non bloquante pour l'utilisation du terminal.

A titre d'exemple, un utilisateur qui affiche immédiatement son répertoire après être arrivé en zone de couverture du dispositif formant répertoire partagé ne verra pas nécessairement les nouveaux contacts apparaître immédiatement. Les nouveaux contacts vont en effet venir progressivement enrichir le répertoire du terminal au fur et à mesure que les transferts s'opèrent et pendant ce temps, l'utilisateur peut utiliser normalement son terminal (notamment pour téléphoner).

Le terminal peut en outre comporter des moyens pour mémoriser dans le répertoire téléphonique personnel une fiche contact mise à disposition par le dispositif. L'utilisateur du terminal 10 peut ainsi faire une copie d'une fiche contact issue du dispositif 1 dans le répertoire téléphonique personnel 11 dudit terminal 10. En d'autres termes, il est possible de faire une copie en local dans le répertoire personnel du terminal 10 des fiches provenant du dispositif formant répertoire partagé 1.

Lorsque le terminal 10 sort de la zone de couverture Zc, et se déconnecte par conséquent du dispositif 1, les fiches contact issues du dispositif 1 (et qui n'ont pas été copiées en local dans le répertoire personnel pendant la durée de la connexion) n'apparaissent plus dans le répertoire téléphonique personnel.

Selon un premier mode de réalisation, les fiches issues du dispositif sont effacées (de la mémoire de travail, ou de la mémoire de stockage de type mémoire Flash) lorsque le terminal 10 se déconnecte du dispositif 1.

Selon un autre mode de réalisation, les fiches issues du dispositif ne sont plus affichées mais restent toutefois stockées dans le terminal 10 de manière à permettre une réincorporation plus rapide lorsque le terminal se connectera à nouveau au dispositif 1.

De manière préférentielle, le dispositif 1 peut en outre comporter des moyens pour importer 5 dans les moyens de stockage 3 les fiches contacts mémorisées dans le répertoire téléphonique 11 de chaque terminal 10, 20 connecté au dispositif.

On note ici que les moyens 4 de mise à disposition et les moyens 5 d'importation peuvent être regroupés dans une même unité de traitement apte notamment à déterminer à tout moment quels sont terminaux présents dans la zone de couverture Zc, ainsi que les fiches contacts mises à disposition par ces terminaux.

Les moyens 5 peuvent en outre être adaptés pour que le statut d'une fiche contact soit également importé et stocké dans les moyens de stockage conjointement à ladite fiche contact. Ce statut indique par exemple, comme cela sera détaillé ci-après, s'il s'agit d'une fiche contact privée (non publique), d'une fiche contact publique permanente ou encore d'une fiche contact publique temporaire.

On peut prévoir que l'importation d'une fiche contact dans les moyens de stockage 3 du dispositif 1 ne soit réalisée que si ladite fiche est mémorisée dans le répertoire téléphonique 11 du terminal 10, 20 connecté au dispositif 1 en y étant indiquée comme étant une fiche contact publique. Alternativement, une fiche contact privée peut être importée dans le dispositif 1, mais elle ne sera pas alors mise à disposition des autres terminaux.

Par défaut, il peut être prévu qu'un utilisateur partage l'ensemble de ces fiches contact personnelles. A contrario, il peut être prévu que par défaut, aucune fiche personnelle n'est partagée.

Le terminal peut en outre comporter des moyens, notamment des moyens logiciels, adaptés pour permettre à l'utilisateur d'indiquer celles de ces fiches contact qu'il souhaite rendre publiques et celles qu'il souhaite ne pas partager.

Les fiches contact importées publiques sont alors rendues accessibles à l'ensemble des terminaux connectés, de la même manière que les fiches contact stockées dans les moyens de stockage du dispositif 1.

Une fiche contact importée dans les moyens de stockage 3 depuis un terminal 10, 20 connecté au dispositif 1 peut y être stockée de manière permanente. Dans un tel cas de figure, cette fiche contact n'apparaîtra pas dans les terminaux connectés comme provenant d'un terminal, mais comme provenant du dispositif 1.

En variante, une fiche contact importée depuis un terminal dans les moyens de stockage 3 peut y être stockée de manière temporaire, pendant la durée de la connexion dudit terminal au dispositif 1. Lorsque le terminal se déconnecte du dispositif, la fiche contact importée dudit terminal 10 n'est plus alors mise à disposition des autres terminaux 20 par l'intermédiaire du dispositif 1. En particulier, ladite fiche contact importée peut être effacée des moyens de stockage 3.

Par défaut, il peut être prévu que l'ensemble des fiches contact personnelles indiquées comme publiques soient stockées de manière temporaire dans les moyens de stockage 3 du dispositif. A contrario, il peut être prévu que par défaut, les fiches personnelles publiques soient importées dans le dispositif pour y être stockées de manière permanente.

Le terminal peut en outre comporter des moyens, notamment des moyens logiciels, adaptés pour permettre à l'utilisateur d'indiquer parmi les fiches contact publiques celles dont il souhaite une importation dans le dispositif 1 et une mise à disposition des autres terminaux permanentes, et celles dont il ne souhaite qu'une importation et une mise à disposition temporaires.

On a représenté à gauche sur la figure 3 l'affichage du répertoire personnel du terminal 10 lorsque celui-ci n'est pas connecté au dispositif 1. Dans ce cas, seules les fiches contact personnelles sont affichées.

On a représenté à droite sur la figure 3 l'affichage du répertoire personnel du terminal 10 lorsque celui-ci est connecté au dispositif 1, un autre terminal 20 étant également connecté au dispositif 1. Dans le cadre de la figure 3, une fiche contact de l'autre terminal 20 (fiche 'Virginie') est publique.

Les fiches contact stockées dans le dispositif 1 sont incorporées dans le répertoire personnel 11 du terminal 10. De même les fiches contact importées dans le dispositif depuis ledit autre terminal 20 sont également incorporées dans le répertoire personnel 11 du terminal 10.

Ces fiches contact issues du dispositif et dudit autre terminal sont alors affichées avec les fiches contact personnelles. Dans l'exemple ici représenté, les fiches contact 'Garage' et 'Plombier' sont des fiches stockées de manière permanente dans le dispositif 1, tandis que la fiche 'Virginie' est une fiche publique provenant dudit autre terminal, par l'intermédiaire du dispositif 1.

De manière avantageuse, et de manière similaire à ce qui a déjà été présenté précédemment en regard de la figure 2, les fiches contact issues du dispositif 1 peuvent être affichées de manière à être différenciées des fiches contact personnelles, par exemple (cf. figure 3) en associant une icône particulière aux fiches stockées de manière permanente dans le dispositif et une icône particulière aux fiches issues d'un autre terminal (dans ce dernier cas, on peut prévoir une seule icône pour l'ensemble des terminaux partageant un ou plusieurs contacts ; on peut également associer une icône à chaque terminal partageant un contact).

On aura compris de ce qui précède que l'invention permet la transmission et la mise en commun de fiches contact de façon temporaire ou permanente entre deux terminaux sans que ces terminaux n'aient à établir de connexion directe entre eux. L'invention permet ainsi de réaliser une connexion « virtuelle » via le dispositif formant répertoire partagé de plusieurs terminaux simultanément.

Selon un mode de réalisation optionnel, un outil de gestion 30 (par exemple du type ordinateur personnel) peut être associé au dispositif afin de simplifier la gestion dudit dispositif. Il s'agit par exemple de permettre, depuis l'outil de gestion, une gestion simplifiée des fiches contact, par exemple en permettant d'effacer ou de rajouter une fiche contact depuis l'outil de gestion. II peut également s'agir de permettre une gestion simplifiée des utilisateurs, c'est-à-dire des identifiants des terminaux concernés par le partage des fiches contact et avec lesquels le dispositif est susceptible d'établir une connexion.

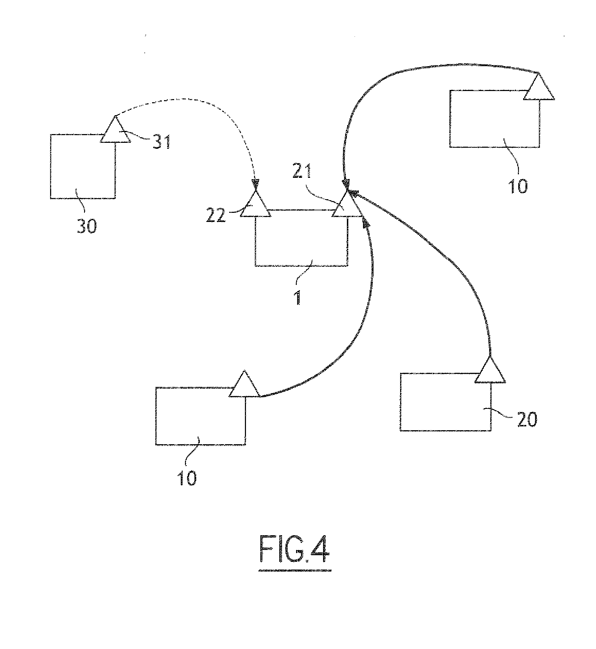

Comme représenté sur la figure 4, le dispositif 1 comprend à la fois des moyens de communication sans fil de type WiFi 21 et des moyens de communication sans fil de type Bluetooth 22. L'outil de gestion 30 comporte de moyens de connexion du type WiFi 31 pour établir une communication selon cette norme avec le dispositif 1. Les terminaux 10, 20 communiquent avec le dispositif par l'intermédiaire de la liaison Bluetooh et peuvent être du type terminal fixe 20 ou terminal cellulaire 10.

On a représenté sur la figure 5 un mode de mise en oeuvre possible du procédé selon l'invention pour ce qui concerne l'établissement de la connexion entre le terminal 10 et le dispositif 1. La figure 6 représente quant à elle un mode de mise en oeuvre possible du procédé selon l'invention pour ce qui concerne la rupture de la connexion entre le terminal 10 et le dispositif 1. Sur ces figures, les flèches représentent les échanges entre le terminal et le dispositif tandis que les blocs représentent les opérations réalisées au niveau du terminal ou au niveau du dispositif.

En référence à la figure 5, le terminal 10 réalise une requête de connexion (flèche F₁) à destination du dispositif 1. En réponse à cette requête, le dispositif 1 signifie au terminal 10 qu'il autorise cette connexion (flèche F₂).

Au bloc T₁, le terminal 10 recherche les contacts à partager. II signifie ensuite ces contacts au dispositif (flèche F₃). Au bloc D₁, le dispositif reçoit les contacts issus du terminal 10 et notifie au terminal la réception de ces contacts (flèche F₄).

Au bloc D₂, le dispositif réalise une recherche de doublons entre les contacts stockés de manière permanente et les contacts stockés temporairement dans ses moyens de stockage 3. Au bloc D₃, le dispositif envoie les nouveaux contacts aux autres terminaux connectés.

Le terminal 10 reçoit ainsi de nouveaux contacts (bloc T₂), issus (cf. flèche F₅) du dispositif et des autres terminaux connectés (via le dispositif). Le terminal 10 reçoit plus précisément des couples « propriétaire/contact ». Au bloc T₂, le terminal 10 accuse réception de ces nouveaux contacts, et au bloc T₃, il met à jour son répertoire avec les nouveaux contacts reçus opérant ainsi un enrichissement (temporaire ou permanent) de son répertoire.

En référence à la figure 6 maintenant, le terminal 10 réalise une requête de déconnexion (flèche F₇) à destination du dispositif 1. En réponse à cette requête, le dispositif 1 signifie au terminal 10 qu'il autorise cette déconnexion (flèche F₈).

Au bloc T₄, le terminal supprime les contacts temporaires reçus alors qu'il était connecté au dispositif. De son côté, le dispositif supprime au bloc D₄ les contacts temporaires reçus du terminal 10 au cours de leur connexion, et au bloc D₅, le dispositif demande aux autres terminaux connectés de supprimer de leur répertoire les contacts temporaires issus du terminal 10 désormais déconnecté.

## Revendications

1. Dispositif (1) formant répertoire téléphonique partagé comprenant des moyens de communication sans fil (2) aptes à établir une connexion avec un terminal de téléphonie (10) situé à proximité du dispositif dans une zone de couverture (Zc) desdits moyens de communication sans fil, le terminal (10) comportant un répertoire téléphonique personnel (11) mémorisant des fiches contact personnelles et disposant de moyens aptes à établir un communication avec un réseau de communication ainsi que de moyens de connexion courte-portée (12) auxdits moyens de communication sans fil (2), le dispositif (1) étant **caractérisé en ce qu'**il comporte en outre :
- des moyens de stockage de fiches contact (3) ;
- des moyens pour mettre à disposition (4) de chaque terminal (10) connecté au dispositif les fiches contact stockées dans les moyens de stockage (3) dudit dispositif pour incorporation desdites fiches issues des moyens de stockage du dispositif dans le répertoire personnel (11) de chaque terminal (10) avec les fiches contact personnelles mémorisées dans ledit répertoire personnel.

2. Dispositif selon la revendication précédente, **caractérisé en ce qu'**il comporte en outre des moyens pour importer (5) dans lesdits moyens de stockage (3) les fiches contacts mémorisées dans le répertoire téléphonique (11) de chaque terminal (10) connecté au dispositif.

3. Dispositif selon la revendication précédente, **caractérisé en ce que** les moyens de stockage (3) comporte en outre des moyens pour associer à chaque fiche contact importée un identifiant du terminal depuis lequel la fiche est importée.

4. Dispositif selon l'une des deux revendications précédentes, **caractérisé en ce qu'**une fiche contact est importée dans lesdits moyens de stockage si elle est mémorisée dans le répertoire téléphonique (11) d'un terminal connecté au dispositif en y étant indiquée comme étant une fiche contact publique.

5. Dispositif selon l'une des trois revendications précédentes, **caractérisé en ce que** les fiches contact importées dans les moyens de stockage (3) depuis un terminal connecté au dispositif y sont stockées de manière permanente.

6. Dispositif selon la revendication précédente, en combinaison avec la revendication 3, **caractérisé en ce que** les fiches contact stockées de manière permanente sont mises à disposition avec un identifiant du dispositif.

7. Dispositif selon l'une des cinq revendications précédentes, **caractérisé en ce que** les fiches contact importées depuis un terminal dans les moyens de stockage (3) y sont stockées de manière temporaire, pendant la durée de la connexion dudit terminal (10) au dispositif (1).

8. Dispositif selon la revendication précédente, en combinaison avec la revendication 3, **caractérisé en ce que** les fiches contact stockées de manière temporaire sont mises à disposition avec l'identifiant de terminal associé.

9. Terminal de téléphonie (10, 20) comportant un répertoire téléphonique personnel (11) mémorisant des fiches contact personnelles et disposant de moyens aptes à établir un communication avec un réseau de communication ainsi que de moyens de connexion courte-portée (12) adaptés pour assurer la connexion dudit terminal (10, 20) à un dispositif (1) selon la revendication 1 lorsque le terminal est dans la zone de couverture (Zc) des moyens de communication sans fil (2) dudit dispositif, **caractérisé en ce qu'**il comporte des moyens pour incorporer dans ledit répertoire personnel les fiches contact mises à disposition par ledit dispositif avec les fiches contact personnelles mémorisées dans ledit répertoire personnel.

10. Terminal selon la revendication précédente, **caractérisé en ce que** lesdits moyens pour incorporer permettent en outre de réaliser un tri parmi les fiches contact mises à disposition par le dispositif et les fiches contact mémorisées dans le répertoire personnel de manière à éliminer les doublons.

11. Terminal (10, 20) selon l'une des deux revendications précédentes, **caractérisé en ce qu'**il comporte en outre des moyens pour mémoriser dans le répertoire téléphonique personnel une fiche contact mise à disposition par le dispositif.

12. Terminal selon l'une des trois revendications précédentes, **caractérisé en ce qu'**il comporte en outre des moyens pour exporter vers le dispositif selon la revendication 2 les fiches contact mémorisées dans le répertoire téléphonique personnel, lesdites fiches exportées étant alors mises à disposition de chaque terminal connecté au dispositif.

13. Terminal selon la revendication précédente, **caractérisé en ce qu'**il comporte des moyens pour permettre à un utilisateur d'indiquer celles des fiches contact mémorisées dans le répertoire personnel qu'il souhaite rendre publiques pour exportation vers le dispositif.

14. Terminal selon la revendication précédente, **caractérisé en ce qu'**il comporte en outre des moyens pour permettre à un utilisateur d'indiquer parmi les fiches de contact publiques celles destinées à être exportées vers le dispositif selon la revendication 3 pour y être stockées de manière permanente.

15. Procédé de partage de fiches contact entre plusieurs terminaux de téléphonie, **caractérisé en ce qu'**il comporte les étapes consistant à :
- prévoir un dispositif selon la revendication 1 ;
- placer un terminal selon la revendication 9 dans la zone de couverture des moyens de communication sans fil du dispositif de manière à établir une connexion entre le dispositif et le terminal ;
- dès la connexion établie, mettre à disposition du terminal les fiches contacts stockées dans le dispositif pour incorporation desdites fiches dans le répertoire téléphonique personnel du terminal.

16. Procédé selon la revendication précédente, **caractérisé en ce qu'**il comporte en outre une étape consistant à mémoriser dans le répertoire téléphonique personnel du terminal une fiche contact mise à disposition par le dispositif.

17. Procédé selon l'une des deux revendications précédentes, **caractérisé en ce qu'**il comporte en outre une étape consistant à exporter vers le dispositif les fiches contact mémorisées dans le répertoire téléphonique personnel du terminal.

18. Procédé selon la revendication précédente, **caractérisé en ce qu'**il comporte une étape consistant pour l'utilisateur d'un terminal à indiquer celles des fiches contact mémorisées dans le répertoire personnel qu'il souhaite rendre publiques pour exportation vers le dispositif.

19. Procédé selon l'une des deux revendications précédentes, **caractérisé en ce qu'**il comporte en outre une étape consistant à stocker dans les moyens de stockage du dispositif les fiches contact importées depuis un terminal connecté au dispositif.

20. Procédé selon la revendication précédente, **caractérisé en ce qu'**il comporte une étape consistant pour l'utilisateur d'un terminal à indiquer parmi les fiches de contact publiques celles destinées à être exportées vers le dispositif pour y être stockées de manière permanente.
